# EUROPÄISCHE PATENTANMELDUNG

(11) **EP 4 730 715 A1**
(43) Veröffentlichungstag der Anmeldung: **22.04.2026**
(21) Anmeldenummer: 25208299.5
(22) Anmeldetag: 13.10.2025
(51) Int. Cl.: H04L 12/14, H04M 15/04, H04M 15/00, H04W 4/24

(54) **KOMMUNIKATIONSSYSTEM ZUR BEREITSTELLUNG VON KOMMUNIKATIONSINFORMATION EINES ENDGERÄTS**

(30) Priorität: 18.10.2024 DE 102024130343
(71) Anmelder: schmidt kom GmbH, 92318 Neumarkt i.d.OPf. (DE)
(72) Erfinder: Schmidt, Armin, 92318 Neumarkt i.d.OPf. (DE)
(74) Vertreter: Hafner & Kohl PartmbB

(57) **Zusammenfassung**

Kommunikationssystem (1), umfassend wenigstens eine, insbesondere Cloud-basierte, Servervorrichtung (6), die dazu ausgebildet ist, wenigstens eine Kommunikationsinformation eines Endgeräts (3), insbesondere eines Mobiltelefons, das basierend auf wenigstens einem Kommunikationsparameter einer SIM-Karteneinrichtung (5) zur Kommunikation in einem bestimmten Kommunikationsnetz (2), insbesondere einem Mobilfunknetz, konfiguriert ist, aus dem Kommunikationsnetz (2) zu erfassen, wobei die Kommunikationsinformation wenigstens eine eingehende und/oder ausgehende Kommunikation, insbesondere ein Telefonat und/oder eine Nachricht, des Endgeräts (3) betrifft, wobei die Servervorrichtung (6) dazu ausgebildet ist, die wenigstens eine Kommunikationsinformation einen Abruf durch eine Nutzerdatenschnittstelle (7) bereitzustellen.

## Beschreibung

Die Erfindung betrifft ein Kommunikationssystem.

Aus dem Stand der Technik sind grundsätzlich Kommunikationssysteme bekannt, bei denen Endgeräte, zum Beispiel Mobiltelefone, dazu verwendet werden, über ein Kommunikationsnetz miteinander oder mit anderen Teilnehmern zu kommunizieren, beispielsweise eine Sprachverbindung herzustellen oder Nachrichten, insbesondere Textnachrichten, zu versenden und zu empfangen.

Weiter ist bekannt, dass ein beschriebenes Endgerät die vorgenommenen Kommunikationen, insbesondere die geführten Sprachverbindungen, d. h. eingehende und ausgehende Telefonate, die mit dem Endgerät geführt wurden, dokumentieren kann, beispielsweise indem anhand einer Anrufliste auf dem Gerät die eingehenden und ausgehenden Telefonate gespeichert werden. Der Benutzer des Endgeräts kann anhand dieser Anrufliste, beispielsweise am Ende eines Arbeitstags, nachvollziehen von welchen Rufnummern angerufen wurde bzw. welche Rufnummern gewählt wurden.

Nachteiligerweise muss der Benutzer, beispielsweise ein Außendienstmitarbeiter, für die Dokumentation der geführten Gespräche die geführten Telefonate aus der Anrufliste auf dem Endgerät entnehmen und diese in eine Nutzerdatenschnittstelle, insbesondere eine CRM-Schnittstelle ("customer relationship management") bzw. ein CRM-Programm, eintragen. Das beschriebene Vorgehen bedeutet für den Benutzer des Endgeräts einen erheblichen Aufwand, da zunächst alle über das Endgerät geführten Telefonate aus der Anrufliste entnommen werden müssen und einzeln in die Nutzerdatenschnittstelle eingetragen werden müssen. Da üblicherweise nicht sämtliche Rufnummern, insbesondere von eingehenden Telefonaten oder neuen Kontakten, in dem Endgerät gespeichert sind, kann der Benutzer möglicherweise bei der Übertragung in die Nutzerdatenschnittstelle manche Rufnummern nicht mehr mit den geführten Gesprächen in Verbindung bringen bzw. diese nicht mehr korrekt zuordnen. Zudem sind Eingabefehler möglich, sodass möglicherweise Gespräche nicht oder falsch zugeordnet werden.

Wird der Benutzer des Endgeräts, beispielsweise der Außendienstmitarbeiter, bei seiner Tätigkeit unterwegs, beispielsweise während der Fahrt in einem Kraftfahrzeug, von einem Kunden angerufen, fällt nachträglich ein Arbeitsaufwand für die Dokumentation an, der erst frühestens am Zielort, beispielsweise in einem Büro oder in einem Hotel, abgearbeitet werden kann. Die dabei anfallende Aufgabe, die im Endgerät gespeicherte Anrufliste händisch in die Nutzerdatenschnittstelle zu übertragen und das Heraussuchen bzw. Abgleichen der Kundendaten zu den in der Anrufliste des Endgeräts dokumentierten Rufnummern stellt einen hohen zeitlichen Aufwand dar und ist zudem aufgrund der manuellen Tätigkeit fehleranfällig.

Der Erfindung liegt die Aufgabe zugrunde, ein demgegenüber verbessertes Kommunikationssystem anzugeben, bei dem insbesondere die Erfassung von Kommunikationsinformationen verbessert ist.

Die Aufgabe wird durch ein Kommunikationssystem mit den Merkmalen des Anspruchs 1 gelöst. Vorteilhafte Ausgestaltungen sind Gegenstand der Unteransprüche.

Wie beschrieben, betrifft die Erfindung ein Kommunikationssystem. Das Kommunikationssystem umfasst wenigstens eine, insbesondere Cloud-basierte, Servervorrichtung, die dazu ausgebildet ist, wenigstens eine Kommunikationsinformation eines Endgeräts, insbesondere eines Mobiltelefons, das basierend auf wenigstens einem Kommunikationsparameter einer SIM-Karteneinrichtung zur Kommunikation in einem bestimmten Kommunikationsnetz, insbesondere einem Mobilfunknetz, konfiguriert ist, aus dem Kommunikationsnetz zu erfassen, insbesondere zu empfangen, wobei die Kommunikationsinformation wenigstens eine eingehende und/oder ausgehende Kommunikation, insbesondere ein Telefonat und/oder eine Nachricht, des Endgeräts betrifft, wobei die Servervorrichtung dazu ausgebildet ist, die wenigstens eine Kommunikationsinformation für einen Abruf durch eine Nutzerdatenschnittstelle bereitzustellen.

Mit anderen Worten beruht die Erfindung auf der Erkenntnis, dass die Servervorrichtung des Kommunikationssystems dazu ausgebildet ist, die Kommunikationsinformation, die die Kommunikation des Endgeräts betrifft, aus dem Mobilfunknetz zu erfassen, beispielsweise zu empfangen, und diese für den Abruf durch eine Nutzerdatenschnittstelle bereitzustellen. Vorteilhafterweise kann somit das Endgerät durch die SIM-Karteneinrichtung, die als eine Hardware-SIM-Karte oder eine virtuelle SIM-Karte bzw. "eSIM" ausgeführt sein kann, so konfiguriert sein, dass das Endgerät über das bestimmte Kommunikationsnetz kommunizieren kann. Mit anderen Worten wird durch das Einlegen bzw. Aktivieren der SIM-Karteneinrichtung in dem Endgerät das Endgeräts zur Teilnahme an dem bestimmten Kommunikationsnetz konfiguriert.

Vorteilhafterweise muss der Nutzer des Endgeräts bzw. muss für den Nutzer des Endgeräts nur die SIM-Karteneinrichtung in das Endgerät eingelegt werden oder die SIM-Karteneinrichtung für das Endgerät aktiviert werden, sodass das Endgerät anschließend über das bestimmte Kommunikationsnetz, beispielsweise ein bestimmtes Mobilfunknetz, kommunizieren kann. Im Speziellen kann das bestimmte Kommunikationsnetz ein Kommunikationsnetz, zum Beispiel ein Mobilfunknetz, eines Betreibers der Servervorrichtung und/oder eines Herausgebers der SIM-Karteneinrichtung sein. Anschließend wird vorteilhafterweise von der Servervorrichtung die wenigstens eine Kommunikationsinformation des Endgeräts erfasst, beispielsweise empfangen, und für den Abruf durch die Nutzerdatenschnittstelle bereitgestellt.

Somit ist es möglich, dass mittels der Nutzerdatenschnittstelle die bereitgestellte Kommunikationsinformation von der Servervorrichtung abgerufen werden kann. Es können daher beliebige mit dem Endgerät geführte Kommunikationen, beispielsweise eingehende und/oder ausgehende Kommunikationen, durch die Kommunikationsinformation bzw. jeweils wenigstens eine Kommunikationsinformation beschrieben werden und von der Servervorrichtung erfasst und für den Nutzerdatenschnittstelle abrufbar bereitgestellt werden. Die Nutzerdatenschnittstelle kann die wenigstens eine Kommunikationsinformation oder die Kommunikationsinformationen für die einzelnen Kommunikationen über einen definierten Zeitraum, beispielsweise einen Arbeitstag, oder bis zum letzten Abruf, von der Servervorrichtung abrufen. Die Servervorrichtung kann die Kommunikationsinformation insbesondere in einem Format bereitstellen, das für die Nutzerdatenschnittstelle vorteilhaft ist bzw. das von der Nutzerdatenschnittstelle verwendet werden kann. Seitens der Nutzerdatenschnittstelle können daher direkt aus der Kommunikationsinformation die notwendigen Daten entnommen werden, beispielsweise eine Synchronisierung mit Kundenprofilen oder Teilnehmerprofilen erfolgen bzw. eine Zuordnung der Kommunikationen zu den jeweiligen Kundenprofilen oder Teilnehmerprofilen in der Nutzerdatenschnittstelle zum Beispiel in einer Datenbank, vorgenommen werden.

Für den Benutzer des Endgeräts entfällt daher der Zeitaufwand bezüglich des Abgleichs der Anrufliste in dem Endgerät mit der Nutzerdatenschnittstelle, sowie das Heraussuchen von Rufnummern aus der Anrufliste und die Zuordnung zu Einträgen in der Nutzerdatenschnittstelle. Da die Kommunikationsinformation noch weitere Informationen bezüglich der Kommunikation des Endgeräts beschreiben kann, beispielsweise eine Uhrzeit, eine Anrufdauer und dergleichen, kann die Nutzerdatenschnittstelle derartige Informationen ebenfalls von der Servervorrichtung abrufen und entsprechend abspeichern bzw. synchronisieren.

Wie bereits beschrieben, kann das Endgerät zum Beispiel als Mobiltelefon ausgeführt sein, oder als Tablet, Notebook oder dergleichen. Grundsätzlich kann jedwedes beliebige Endgerät, das mittels einer beschriebenen SIM-Karteneinrichtung zur Kommunikation über das Kommunikationsnetz bzw. zur Teilnahme an dem Kommunikationsnetz ausgebildet sein kann, verwendet werden. Weiter vorteilhaft ist, dass das Endgerät selbst die Kommunikationsinformation nicht erfassen bzw. nicht an die Servervorrichtung übertragen muss, sondern die Servervorrichtung die Kommunikationsinformation aus dem Kommunikationsnetz erfasst oder aus diesem bereitgestellt bekommt. Daher kann der Datentransfer bzw. der Datenverkehr des Kommunikationssystems, insbesondere des Endgeräts, verbessert werden. Im Besonderen fallen für das Bereitstellen der Kommunikationsinformation an die Nutzerdatenschnittstelle seitens des Endgeräts keine zu übertragenden Daten an.

Bei dem Kommunikationssystem kann in einer Ausführungsform vorgesehen sein, dass das Kommunikationssystem dazu ausgebildet ist, die Kommunikationsinformation parallel zu der Kommunikation des Endgeräts zu übertragen. Wie beschrieben, kommt die Kommunikationsinformation dabei aus dem Kommunikationsnetz und wird von der Servervorrichtung erfasst bzw. an diese übertragen, d. h. von der Servervorrichtung empfangen. Die Kommunikationsinformation wird daher aus dem Kommunikationsnetz bzw. aus dem Mobilnetz, abgezweigt. Das Kommunikationssystem ist daher zu einem Abzweig der Kommunikationsinformation aus dem Kommunikationsnetz ausgebildet.

Es handelt sich somit bei dem Erfassen der Kommunikationsinformation durch die Servervorrichtung nicht um eine Rufumleitung bzw. um eine Übertragung der Kommunikationsinformation von dem Endgerät an die Servervorrichtung, sondern die Kommunikationsinformation wird von der Servervorrichtung direkt aus dem Kommunikationsnetz erfasst, während die Kommunikation zwischen dem Endgerät und einem weiteren Teilnehmer über das Kommunikationsnetz hergestellt wird. Dies ist insbesondere dadurch möglich, da die Integration der SIM-Karteneinrichtung nativ in die Servervorrichtung erfolgen kann bzw. eine native Integration ausgeführt sein kann. Die Kommunikationsinformation, die das Endgerät betrifft, wird parallel an die Servervorrichtung übertragen bzw. parallel von der Servervorrichtung erfasst. Das Erfassen der Kommunikationsinformation bzw. das Empfangen der Kommunikationsinformation durch die Servervorrichtung bildet somit einen parallelen Datenstrom von dem Kommunikationsnetz zu der Servervorrichtung aus, die parallel zu der Kommunikation zu dem Endgerät erfolgt.

Die parallele Erfassung bzw. Parallelübertragung an die Servervorrichtung findet insbesondere parallel zu dem Aufbau der Kommunikation an das Endgerät bzw. durch das Endgerät statt bzw. erfolgt die Erfassung der Kommunikationsinformation parallel zu der Ausführung der Kommunikation mit dem Endgerät. Es ist daher nicht erforderlich, nach Abschluss der Kommunikation mit dem Endgerät die Kommunikationsinformation zu übertragen. Mit anderen Worten kann bei dem Kommunikationssystem vorgesehen sein, dass die Kommunikationsinformation in Echtzeit an die Servervorrichtung übertragen wird bzw. kann das Kommunikationssystem dazu ausgebildet sein, die Kommunikationsinformation in Echtzeit mittels der Servervorrichtung zu erfassen, im Speziellen mittels der Servervorrichtung zu empfangen. Die Kommunikationsinformation wird aus dem Kommunikationsnetz, im Speziellen dem Mobilfunknetz, somit in Echtzeit bzw. in "real time" erfasst, wie dies zuvor beschrieben wurde. Beispielsweise kann zeitgleich mit einer eingehenden oder ausgehenden Kommunikation die Kommunikationsinformation an die Servervorrichtung übertragen werden, d. h. insbesondere von dieser erfasst, also empfangen, werden.

In einer Ausführungsform des Kommunikationssystems kann vorgesehen sein, dass das Kommunikationssystem dazu ausgebildet ist, mittels der Servervorrichtung die wenigstens eine Kommunikationsinformation direkt der Nutzerdatenschnittstelle zum Abruf bereitzustellen oder es kann das Kommunikationssystem dazu ausgebildet sein, die Kommunikationsinformation von der Servervorrichtung an eine Treibereinrichtung zu übertragen, welche Treibereinrichtung dazu ausgebildet ist, die wenigstens eine Kommunikationsinformation direkt der Nutzerdatenschnittstelle zum Abruf bereitzustellen. Die Treibereinrichtung kann in die Servervorrichtung integriert sein bzw. einen Bestandteil der Servervorrichtung bilden. Die Servervorrichtung kann zum Beispiel eine Servereinrichtung und eine Treibereinrichtung umfassen. Die Servervorrichtung kann somit in der ersten beschriebenen Alternative sowohl das Erfassen der Kommunikationsinformation aus dem Kommunikationsnetz ausführen und die Kommunikationsinformation, beispielsweise transformiert in ein Format für die Nutzerdatenschnittstelle, der Nutzerdatenschnittstelle zum Abruf bereitstellen.

In der zweiten Alternative kann die Servervorrichtung, beispielsweise die Servereinrichtung der Servervorrichtung, für das Erfassen der Kommunikationsinformation aus dem Kommunikationsnetz vorgesehen sein, wobei zusätzlich eine Treibereinrichtung vorgesehen ist, die das Bereitstellen der Kommunikationsinformation für die Nutzerdatenschnittstelle vornimmt. Nach der zweiten Alternative kann die Treibereinrichtung somit als "Middleware" verstanden werden, die die Schnittstelle zwischen der Servervorrichtung, insbesondere der Servereinrichtung, und der Nutzerdatenschnittstelle ausbildet. Die Treibereinrichtung kann von der Servervorrichtung die Kommunikationsinformation zugeführt bekommen und kann diese, falls erforderlich, in ein Format überführen, das für eine Verarbeitung durch die wenigstens eine Nutzerdatenschnittstelle geeignet ist.

In beiden Fällen kann vorgesehen sein, dass weder in der Servervorrichtung noch in der Treibereinrichtung eine Speicherung der Kommunikationsinformation nach dem Abruf der Kommunikationsinformation ausgeführt wird. Mit anderen Worten kann nach Abruf der wenigstens einen Kommunikationsinformation durch die Nutzerdatenschnittstelle die Kommunikationsinformation von der Servervorrichtung und/oder von der Treibereinrichtung gelöscht werden. Daneben besteht die Möglichkeit, eine Speicherung der Kommunikationsinformation für einen bestimmten Zeitraum, zum Beispiel wenigstens einen Tag, insbesondere wenigstens eine Woche, bevorzugt wenigstens ein Monat, im Speziellen drei Monate, auszuführen.

Wie beschrieben, kann die Kommunikationsinformation grundsätzlich eine Kommunikation betreffen, die mit dem wenigstens einen Endgerät ausgeführt wird. Grundsätzlich können demselben Kommunikationssystem eine Vielzahl von Endgeräten zugeordnet sein, die mittels SIM-Karteneinrichtungen zu der Teilnahme an dem Kommunikationsnetz des Kommunikationssystems konfiguriert sind, d. h. derart konfiguriert sind, dass die Endgeräte über das bestimmte Kommunikationsnetz des Kommunikationssystems mit anderen Teilnehmern kommunizieren können. Die anderen Teilnehmer können in demselben Kommunikationsnetz oder mit einem mit dem Kommunikationsnetz verbindbaren oder verbundenen Teilnehmernetz registriert sein. Die Kommunikationsinformation kann weitgehend beliebige Informationen umfassen, die die Kommunikation mit dem Endgerät betrifft. In einer Ausführungsform kann die Kommunikationsinformation wenigstens eine der folgenden Informationen umfassen:
- ein eingehendes, insbesondere angenommenes, Telefonat und/oder
- ein ausgehendes Telefonat und/oder
- eine eingehende Textnachricht und/oder
- eine ausgehende Textnachricht und/oder
- einen verpassten Anruf und/oder
- einen weitergeleiteten Anruf und/oder
- eine Anrufdauer und/oder
- eine Teilnehmeridentifikation, insbesondere eine Rufnummer, und/oder
- eine Sprachnachricht und/oder
- eine Telefonkonferenz.

Zweckmäßig ist, zumindest die Teilnehmeridentifikation in der Kommunikationsinformation zu erfassen bzw. diese in Form der Kommunikationsinformation aus dem Kommunikationsnetz aufzugreifen, da anhand der Teilnehmeridentifikation, im Speziellen anhand der Rufnummer des Teilnehmers mit dem die Kommunikation stattgefunden hat bzw. stattfindet, eine Zuordnung erfolgen kann. Weiter zweckmäßig ist, dass ein Zeitpunkt, zu dem die Kommunikation stattfindet oder stattgefunden hat, von der Kommunikationsinformation umfasst wird. In der beschriebenen Ausführungsform können von der Kommunikationsinformation neben einer Teilnehmeridentifikation, beispielsweise einer Rufnummer, und einem Zeitpunkt, zu dem die Kommunikation stattfindet oder stattgefunden hat, auch noch weitere Informationen umfasst werden.

Zum Beispiel kann die Kommunikation spezifiziert werden, indem die Kommunikationsinformation angibt, ob die beschriebene Kommunikation ein eingehendes, insbesondere angenommenes, Telefonat oder ein ausgehendes Telefonat betrifft. Es kann insbesondere unterschieden werden, ob die Kommunikation angenommen wird, beispielsweise ob ein eingehendes Telefonat angenommen wird oder ob die Verbindung bei einem ausgehenden Telefonat hergestellt werden konnte. Entsprechend können verpasste Anrufe oder nicht erfolgreiche Anrufversuche eingehend oder ausgehend ebenfalls als Bestandteil der Kommunikationsinformation dokumentiert werden.

Beides gilt für eingehende Textnachrichten und ausgehende Textnachrichten, die in der Kommunikationsinformation dokumentiert werden können. Ebenso ist es möglich, weitergeleitete Anrufe zu dokumentieren, sodass nachvollzogen werden kann, ob die Kommunikation von dem Endgerät an wenigstens einen weiteren Kommunikationspartner weitergeleitet bzw. vermittelt wurde. Zusätzlich kann beispielsweise auch die Anrufdauer von der Kommunikationsinformation umfasst werden. Beispielsweise kann durch die Kommunikationsinformation die Anrufdauer beschrieben werden, sodass nachvollzogen werden kann, welches Gespräch wie lange gedauert hat. Zusätzlich kann die Kommunikationsinformation auch Sprachnachrichten, beispielsweise eingehende oder ausgehende Sprachnachrichten, insbesondere auf einem Anrufbeantworter bzw. einer "Mailbox" gespeicherte Sprachnachrichten, mit der Kommunikationsinformation abgedeckt bzw. von dieser umfasst werden.

Zudem kann die Kommunikationsinformation wenigstens eine Telefonkonferenz beschreiben bzw. Informationen zu wenigstens einer Telefonkonferenz umfassen, insbesondere die Teilnehmeridentifikationen der Teilnehmer und/oder die Konferenzdauer. Wie auch bei eingehenden oder ausgehenden Telefonaten kann somit durch die Kommunikationsinformation beispielsweise dokumentiert werden, dass die Telefonkonferenz stattgefunden hat und/oder wann die Telefonkonferenz stattgefunden hat und/oder wie die Telefonkonferenz zustande kam, im Speziellen, ob das Endgerät angerufen wurde oder angerufen hat und welche Teilnehmer, im Besonderen zu welchem Zeitpunkt, der Telefonkonferenz hinzugefügt wurden oder diese verlassen haben.

In einer weiteren Ausführungsform des Kommunikationssystems kann vorgesehen sein, dass die Nutzerdatenschnittstelle basierend auf einer aus der wenigstens einen Kommunikationsinformation bestimmten Teilnehmeridentifikation zur Zuordnung einer Kommunikationsinformation zu einem Teilnehmer ausgebildet ist. In der Ausführungsform kann somit vorgesehen sein, dass die Synchronisierung der Kommunikationsinformation mit den Nutzerdaten seitens der Nutzerdatenschnittstelle ausgeführt wird. Das bedeutet, dass seitens des Kommunikationssystems, insbesondere seitens der Servervorrichtung und/oder der Treibereinrichtung keine Synchronisierung bzw. Zuordnung der Kommunikationsinformation zu einem Datenbestand erfolgt.

Es wird von der Nutzerdatenschnittstelle die wenigstens eine Kommunikationsinformation abgerufen und anhand der Teilnehmeridentifikation, beispielsweise anhand der Rufnummer, eine bestimmte Kommunikationsinformation einem Datensatz für einen Teilnehmer in der Nutzerdatenschnittstelle zugeordnet, für den Nutzerdaten hinterlegt sind. Sind keine Benutzerdaten hinterlegt, beispielsweise für einen neuen Teilnehmer, können beispielsweise neue Nutzerdaten von der Nutzerdatenschnittstelle erzeugt werden. Seitens des Kommunikationssystems, insbesondere seitens der Servervorrichtung, insbesondere der Servereinrichtung, und/oder der Treibereinrichtung, kann ein Bereitstellen der Kommunikationsinformation in einer Vielzahl von unterschiedlichen Formaten vorgesehen sein, sodass eine Vielzahl unterschiedlicher Nutzerdatenschnittstellen auf die Kommunikationsinformation zugreifen kann.

Grundsätzlich kann die Nutzerdatenschnittstelle als Bestandteil des Kommunikationssystems verstanden werden, da diese von der Servervorrichtung bzw. von der Treibereinrichtung die Kommunikationsinformation abrufen kann. Ebenso ist es möglich, dass das Kommunikationssystem die Nutzerdatenschnittstelle nicht umfasst, sondern das Kommunikationssystem an der Servervorrichtung bzw. an der Treibervorrichtung endet, an der die Kommunikationsinformation zum Abruf bereitgestellt wird.

Bei der Nutzerdatenschnittstelle kann es sich insbesondere um ein System handeln, das von einem bestimmten Benutzerkreis verwendet wird. Beispielsweise kann ein bestimmter Benutzerkreis, zum Beispiel die Mitarbeiter eines bestimmten Unternehmens, Endgeräte nutzen, die mittels zuvor beschriebener SIM-Karteneinrichtungen zur Kommunikation über das bestimmte Kommunikationsnetz ausgebildet sind. Die Kommunikationsinformationen die von der Servervorrichtung des Kommunikationssystems für diesen Benutzerkreis erfasst werden, werden durch die Servervorrichtung und/oder die Treibereinrichtung zum Abruf bereitgestellt. Die Nutzerdatenschnittstelle des bestimmten Unternehmens kann somit Kommunikationsinformationen abrufen und in der Datenbank für das bestimmte Unternehmen den einzelnen Teilnehmern, beispielsweise Kunden, zuordnen. Hierbei können unterschiedliche Unternehmen dieselbe bzw. gleiche Nutzerdatenschnittstelle nutzen, beispielsweise dasselbe CRM-System.

Dabei kann eine Authentifizierung vorgesehen sein, sodass die Kommunikationsinformation für einen Nutzer eines Endgeräts nur von dem Nutzer über dessen Nutzerdatenschnittstelle abgerufen werden kann oder es können von einem bestimmten Benutzerkreis Kommunikationsinformationen über die verwendete Nutzerdatenschnittstelle von allen Endgeräten des Benutzerkreises abgerufen werden. Vorteilhafterweise kann durch die Nutzerdatenschnittstelle auch ein Export der Kommunikationsinformation ausgeführt werden. In einer Datenbank, die mit der Nutzerdatenschnittstelle verbunden sein kann, können die einzelnen Kommunikationsinformationen den Teilnehmern, beispielsweise Kundeneinträgen, zugeführt und/oder mit diesen synchronisiert werden.

In einer Weiterbildung des Kommunikationssystems kann das Kommunikationssystem dazu ausgebildet sein, eine Gesprächsinformation aus einer Sprachnachricht, insbesondere von einer Mailbox, zu bestimmen. Wie beschrieben, kann die Kommunikationsinformation auch Sprachnachrichten umfassen. Ist beispielsweise der Benutzer des Endgeräts nicht erreichbar und wird ein eingehendes Telefonat an die Mailbox weitergeleitet, kann der Teilnehmer eine Sprachnachricht hinterlassen. Diese kann von der Servervorrichtung erfasst werden und im Rahmen der Kommunikationsinformation entweder über die Treibereinrichtung oder direkt bereitgestellt werden. Hierbei ist es möglich, dass eine Gesprächsinformation aus der Sprachnachricht bestimmt wird, beispielsweise vermittels Spracherkennungsalgorithmen bzw. künstlicher Intelligenz. Alternativ oder zusätzlich ist es ebenso möglich, die Sprachnachricht in Text zu übersetzen bzw. zu transformieren. Anschließend kann der erkannte bzw. transformierte Text als Kommunikationsinformation bereitgestellt und von der Nutzerdatenschnittstelle abgerufen werden bzw. an die Datenbank der Nutzerdatenschnittstelle zugestellt werden.

Bei dem Kommunikationssystem kann weiter vorgesehen sein, dass das Kommunikationssystem eine Anwendungsprogrammierschnittstelle und/oder eine Telefonie-Anwendungsprogrammierschnittstelle umfasst. Insbesondere kann das Kommunikationssystem zur Kommunikation mit der Nutzerdatenschnittstelle mittels einer Anwendungsprogrammierschnittstelle ("application programming interface", API) und/oder mittels einer Telefonie-Anwendungsprogrammierschnittstelle ("telephony application programming interface", TAPI) ausgebildet sein. Je nach Ausführung der Nutzerdatenschnittstelle kann die Anbindung der Nutzerdatenschnittstelle somit mittels API oder mittels TAPI erfolgen, sodass das Kommunikationssystem flexibel mit unterschiedlichen Nutzerdatenschnittstellen genutzt bzw. verwendet werden kann. Bei einer Anbindung mittels der Anwendungsprogrammierschnittstelle sind vorteilhafterweise an der Nutzerdatenschnittstelle, d. h. an dem Teilnehmersystem bzw. Kundensystem, keine Anpassungen nötig. Das Hosten kann seitens der Servervorrichtung oder einem anderen System vorgenommen werden, insbesondere ein System des die SIM-Karteneinrichtungen ausgebenden Anbieters. Wird eine Telefonie-Anwendungsprogrammierschnittstelle seitens der Nutzerdatenschnittstelle verwendet, kann eine lokale Konfiguration der Nutzerdatenschnittstelle erforderlich sein bzw. kann die Nutzerdatenschnittstelle lokal, im Speziellen durch Installation eines Treibers, konfiguriert werden.

Neben dem Kommunikationssystem betrifft die Erfindung eine SIM-Karteneinrichtung für ein solches Kommunikationssystem, wobei die SIM-Karteneinrichtung zur Konfiguration eines Endgeräts zur Teilnahme an dem Kommunikationsnetz des Kommunikationssystems ausgebildet ist. Mit anderen Worten wird durch die SIM-Karteneinrichtung ein Endgerät zur Kommunikation in dem Kommunikationsnetz des Kommunikationssystems konfiguriert. Dies kann beispielsweise durch Einlegen einer SIM-Karteneinrichtung in das Endgerät bzw. Aktivieren der SIM-Karteneinrichtung in dem Endgerät erfolgen, wie dies bereits zuvor beschrieben wurde.

Weiter betrifft die Erfindung ein Verfahren zum Betreiben eines Kommunikationssystems, insbesondere eines beschriebenen Kommunikationssystem, umfassend wenigstens eine, insbesondere Cloud-basierte, Servervorrichtung, mittels welcher Servervorrichtung wenigstens eine Kommunikationsinformation eines Endgeräts, insbesondere eines Mobiltelefons, das basierend auf wenigstens einem Kommunikationsparameter einer SIM-Karteneinrichtung zur Kommunikation in einem bestimmten Kommunikationsnetz, insbesondere einem Mobilfunknetz, konfiguriert ist, aus dem Kommunikationsnetz erfasst wird, wobei die Kommunikationsinformation wenigstens eine eingehende und/oder ausgehende Kommunikation, insbesondere ein Telefonat und/oder eine Nachricht, des Endgeräts betrifft, wobei mittels der Servervorrichtung die wenigstens eine Kommunikationsinformation für einen Abruf durch eine Nutzerdatenschnittstelle bereitgestellt wird.

Das hierin beschriebene Kommunikationssystem kann zur Ausführung des Verfahrens verwendet werden. Das Verfahren kann auf dem hierin beschriebenen Kommunikationssystem in allen Einzelheiten ausgeführt werden. Sämtliche Vorteile, Einzelheiten und Merkmale, die in Bezug auf das Kommunikationssystem beschrieben wurden, sind vollständig auf die SIM-Karteneinrichtung und das Verfahren übertragbar und umgekehrt.

Die Erfindung wird nachfolgend anhand von Ausführungsbeispielen unter Bezugnahme auf die Fig. erläutert. Die Fig. sind schematische Darstellungen und zeigen:
- Fig. 1: eine Prinzipdarstellung eines Kommunikationssystems nach einem ersten Ausführungsbeispiel;
- Fig. 2: eine Prinzipdarstellung eines Kommunikationssystems nach einem zweiten Ausführungsbeispiel; und
- Fig. 3: eine Prinzipdarstellung eines Ablaufdiagramms eines Verfahrens zum Betreiben eines Kommunikationssystems nach einem dritten Ausführungsbeispiel.

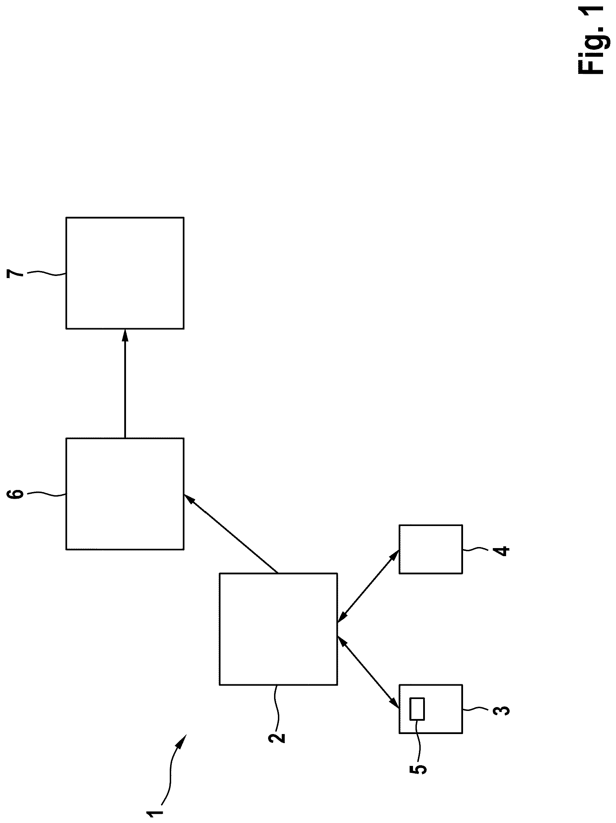

Fig. 1 zeigt ein Kommunikationssystem 1 nach einem ersten Ausführungsbeispiel. Das Kommunikationssystem 1 stellt ein Kommunikationsnetz 2, im Speziellen ein Mobilfunknetz bzw. "Handynetz" bereit. Über das Kommunikationsnetz 2 ist eine Kommunikation eines Endgeräts 3 mit wenigstens einem weiteren Teilnehmer 4 möglich. Die Kommunikation kann zum Beispiel über eine Zentralstelle erfolgen, wobei die Kommunikation von dem Endgerät 3 an der Zentralstelle von dem Kommunikationsnetz 2 an ein Teilnehmernetz es Teilnehmers 4 übergeben werden kann und/oder eine Kommunikation aus dem Teilnehmernetz in das Kommunikationsnetz 2 übergeben werden kann. Insbesondere können über das Kommunikationsnetz 2 Sprachverbindungen bzw. Telefonate zwischen dem Endgerät 3 und dem weiteren Teilnehmer 4 geführt werden. Ebenso ist es möglich, Nachrichten, beispielsweise Textnachrichten, zwischen dem Endgerät 3 und dem Teilnehmer 4 auszutauschen bzw. über das Kommunikationsnetz 2 zu übermitteln.

Beispielhaft ist dargestellt, dass das Endgerät 3 mittels einer SIM-Karteneinrichtung 5 zur Kommunikation über das Kommunikationsnetz 2 des Kommunikationssystems 1 konfiguriert ist. Mit anderen Worten kann mittels der SIM-Karteneinrichtung 5 das Endgerät 3 dazu konfiguriert sein, an dem Kommunikationsnetz 2 teilzunehmen. Die SIM-Karteneinrichtung 5 kann beispielsweise als Hardware, d. h. als physische SIM-Karte, ausgebildet sein oder als virtuelle SIM-Karte, insbesondere als sogenannte "eSIM". Zum Beispiel kann ein Benutzer des Endgeräts 3 die SIM-Karteneinrichtung 5 einlegen oder aktivieren, sodass das Endgerät 3 zur Kommunikation über das Kommunikationsnetz 2 ausgebildet ist, d. h. an dem Kommunikationsnetz 2 teilnimmt.

Das Kommunikationsnetz 1 umfasst ferner eine Servervorrichtung 6, die dazu ausgebildet ist, eine Kommunikationsinformation des Endgeräts 3, das zur Teilnahme an dem Kommunikationsnetz 2 konfiguriert ist, zu erfassen. Die Servervorrichtung 6 ist insbesondere Cloud-basiert bzw. als "Cloud" ausgeführt. Die Kommunikationsinformation, die von der Servervorrichtung 6 aus dem Kommunikationsnetz 2 erfasst wird, betrifft die Kommunikation des Endgeräts 3, beispielsweise mit dem Teilnehmer 4 oder einem beliebigen andere Teilnehmer. Es erfolgt dabei eine native Integration, sodass die Kommunikationsinformation parallel aus dem Kommunikationsnetz 2 an die Servervorrichtung 6 übertragen wird bzw. von der Servervorrichtung 6 aus dem Kommunikationsnetz 2 empfangen werden kann.

Ersichtlich ist daher keine direkte Verbindung zwischen dem Endgerät 3 und der Servervorrichtung 6 erforderlich, da nicht das Endgerät 3 die Kommunikationsinformation an die Servervorrichtung 6 sendet, sondern die Servervorrichtung 6 die Kommunikationsinformation aus dem Kommunikationsnetz 2 direkt empfängt, beispielsweise aus dem Mobilfunknetz, das von dem Endgerät 3 aufgrund der Konfiguration mittels der SIM-Karteneinrichtung 5 verwendet wird.

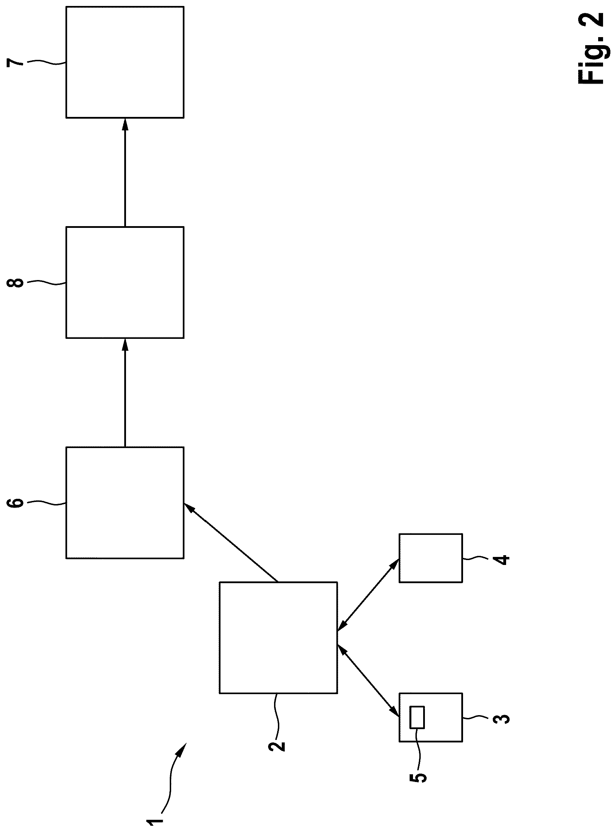

Die Kommunikationsinformation betrifft beispielsweise eine eingehende und/oder ausgehende Kommunikation mit dem Endgerät 3, beispielsweise angenommene, abgewiesene, verpasste, weitergeleitete, ausgehende, insbesondere erfolgreiche oder erfolglose, Telefonate und/oder Nachrichten des Endgeräts 3. ferner können auch Sprachnachrichten von der Kommunikationsinformation umfasst werden, beispielsweise Nachrichten auf einem Anrufbeantworter bzw. einer "Mailbox". Die Kommunikationsformation kann für derartige Kommunikationen auch weitere Informationen bereitstellen, beispielsweise eine Anrufdauer, einen Anrufzeitpunkt und dergleichen. Vorteilhafterweise kann in jedem Fall eine Teilnehmeridentifikation, im Speziellen eine Rufnummer, des Teilnehmers 4 von der Kommunikationsinformation umfasst sein. Der "Teilnehmer 4" in Fig. 1, 2 steht beispielhaft für jedweden möglichen Teilnehmer, mit dem eine Kommunikation mit dem Endgerät 3 hergestellt werden kann.

Von der Servervorrichtung 6 wird die Kommunikationsinformation anschließend für eine Nutzerdatenschnittstelle 7 zum Abruf bereitgestellt. Das bedeutet, dass die Nutzerdatenschnittstelle 7 die Kommunikationsinformation von der Servervorrichtung 6 abrufen kann. Beispielsweise wird die Kommunikationsinformation bereits parallel mit der Kommunikation, die von oder zu dem Endgerät 3 aufgebaut wird, aus dem Kommunikationsnetz 2 von der Servervorrichtung 6 abgegriffen bzw. von der Servervorrichtung 6 empfangen.

Die Servervorrichtung 6 kann in dem in Fig. 1 dargestellten Ausführungsbeispiel die Kommunikationsinformation in ein Format transformieren, das von der Nutzerdatenschnittstelle 7 verarbeitet werden kann. Abweichend hiervon ist in Fig. 2 in einem zweiten Ausführungsbeispiel dargestellt, dass eine Treibereinrichtung 8 verwendet werden kann, die die Kommunikationsinformation von der Servervorrichtung 6 zugeführt bekommt und die dazu ausgebildet ist, der Nutzerdatenschnittstelle 7 die Kommunikationsinformation bereitzustellen. Die Treibereinrichtung 8 kann daher auch als Bestandteil der Servervorrichtung 6 aufgefasst werden.

Die Servervorrichtung 6 stellt, wie beschrieben, die Kommunikationsinformation zur Verfügung, wobei diese entweder von der Servervorrichtung 6 direkt bereitgestellt werden kann und direkt durch die Nutzerdatenschnittstelle 7 von der Servervorrichtung 6 abgerufen wird oder die Kommunikationsinformation kann nach der Ausführungsform von Fig. 2 von der Servervorrichtung 6 für den Abruf bereitgestellt werden, jedoch von der Treibereinrichtung 8 zuerst von der Servervorrichtung 6, zum Beispiel einer Servereinrichtung der Servervorrichtung 6, abgerufen werden. In diesem Fall können die Servereinrichtung und die Treibereinrichtung 8 als Bestandteile der übergeordneten "Servervorrichtung 6" aufgefasst werden. Anschließend kann die Kommunikationsinformation in ein für die Nutzerdatenschnittstelle 7 geeignetes Format transformiert werden. In der in Fig. 2 dargestellten Ausführungsform erfolgt der Abruf mittels der Nutzerdatenschnittstelle 7 nicht direkt, sondern indirekt von der Servervorrichtung 6, nämlich über die Treibereinrichtung 8.

Die Servervorrichtung 6 in Fig. 1 oder die Treibereinrichtung 8 in Fig. 2 können die Kommunikationsinformation in verschiedenen Formaten bereitstellen, sodass mit unterschiedlichen Nutzerdatenschnittstellen die Kommunikationsinformation in einem geeigneten Format abgerufen werden kann. Dabei kann die Nutzerdatenschnittstelle 7 einen Abruf der Kommunikationsinformation mittels einer Anwendungsprogrammierschnittstelle (API) oder einer Telefonie-Anwendungsprogrammierschnittstelle (TAPI) vornehmen bzw. dazu ausgebildet sein. Somit kann das Kommunikationssystem 1 zu einem Bereitstellen der Kommunikationsinformation mittels API oder TAPI ausgebildet sein.

Die Zuordnung der Kommunikationsinformation zu einem bestimmten Teilnehmer 4 erfolgt seitens der Nutzerdatenschnittstelle 7. Das bedeutet, dass die Nutzerdatenschnittstelle 7, wie beschrieben, die wenigstens eine Kommunikationsinformation abrufen kann, beispielsweise direkt von der Servervorrichtung 6, wie in Fig. 1 gezeigt oder von der Treibereinrichtung 8, wie in Fig. 2 gezeigt ist. Anhand der Teilnehmeridentifikation, beispielsweise der Rufnummer, wird die Kommunikationsinformation einem bestimmten Eintrag, beispielsweise einem Nutzereintrag oder einem Teilnehmereintrag, seitens der Nutzerdatenschnittstelle 7 zugeordnet, im Speziellen in einer Datenbank gespeichert bzw. wird der entsprechende Teilnehmereintrag synchronisiert.

Vorteilhafterweise ist es für den Benutzer des Endgeräts 3 daher nicht erforderlich, dass dieser die einzelnen Einträge, beispielsweise aus einer Anrufliste des Endgeräts 3, manuell in die Nutzerdatenschnittstelle 7, beispielsweise eine CRM-Software oder ein CRM-System, überträgt. Stattdessen ist vorteilhaft vorgesehen, dass die Kommunikationsinformation automatisch aufgrund der nativen Integration direkt aus dem Kommunikationsnetz 2 von der Servervorrichtung 6 empfangen wird. Es kann die Kommunikationsinformation anschließend an die Nutzerdatenschnittstelle 7 übertragen bzw. durch diese abgerufen werden. Dadurch entfällt für den Benutzer des Endgeräts 3 ein großer Zeitaufwand bzw. Arbeitsaufwand.

Das Kommunikationssystem 1 kann eine beliebige Anzahl von Endgeräten 3 aufweisen, die entsprechende SIM-Karteneinrichtung 5 umfassen bzw. durch diese konfiguriert sind, an dem Kommunikationsnetz 2 teilzunehmen bzw. über dieses zu kommunizieren.

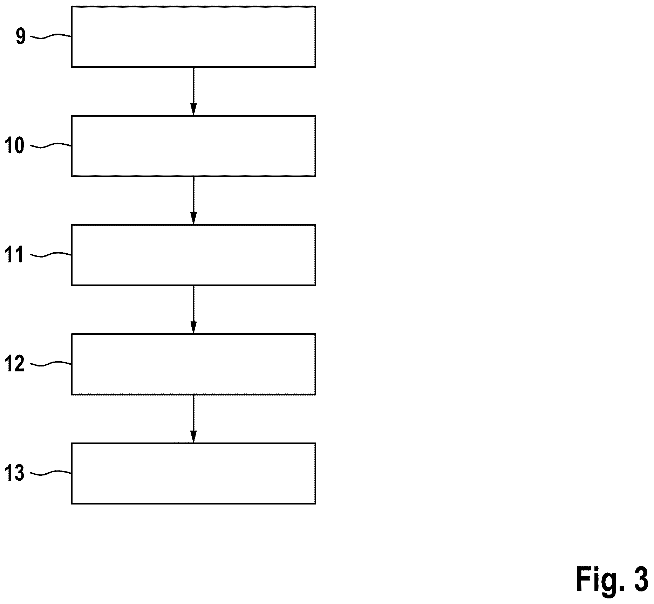

Fig. 3 zeigt schematisch ein Ablaufdiagramm des hierin beschriebenen Verfahrens zum Betreiben des Kommunikationssystems 1. Das Verfahren kann auf den Kommunikationssystemen 1 aus Fig. 1, 2 ausgeführt werden bzw. können die Kommunikationssysteme 1 von Fig. 1, 2 verwendet werden, um das Verfahren gemäß Fig. 3 auszuführen. Sämtliche Vorteile, Einzelheiten und Merkmale, die in Bezug auf die Kommunikationssysteme 1 aus Fig. 1, 2 beschrieben wurden, sind daher auf das hierin beschriebene Verfahren nach Fig. 3 übertragbar und umkehrt.

Rein schematisch kann in dem gezeigten Verfahren in Block 9 eine Kommunikation mit dem Endgerät 3, beispielsweise nach Fig. 1, 2 stattfinden, insbesondere mit dem Teilnehmer 4. Die Kommunikation erfolgt, insbesondere seitens des Endgeräts 3, über das Kommunikationsnetz 2, zu dessen Teilnahme das Endgerät 3 durch die SIM-Karteneinrichtung 5 konfiguriert ist, wie dies bereits zuvor beschrieben wurde.

In dem darauf folgenden Block 10 erfolgt ein Erfassen der beschriebenen Kommunikationsinformation durch die Servervorrichtung 6 aus dem Kommunikationsnetz 2. Es soll noch einmal verdeutlicht werden, dass das Zuführen der Kommunikationsinformation 6 bzw. das Erfassen oder Empfangen der Kommunikationsinformation durch die Servervorrichtung 6 nicht von dem Endgerät 3 erfolgt, sondern aus dem Kommunikationsnetz 2, sodass keine direkte Übertragung zwischen Endgerät 3 und Servervorrichtung 6 erforderlich ist bzw. stattfindet.

Wie bereits beschrieben, können durch die Kommunikationsinformation verschiedenste Informationen umfasst werden, wobei zweckmäßigerweise zumindest die Teilnehmeridentifikation, insbesondere anhand der Rufnummer des Teilnehmers 4, sowie eine Zeitinformation, insbesondere der Zeitpunkt an dem die Kommunikation stattgefunden hat, von der Kommunikationsinformation umfasst werden. Handelt es sich bei der Kommunikation beispielsweise um eine Sprachnachricht, insbesondere auf einer "Mailbox", kann diese in Block 11 verarbeitet werden, beispielsweise mittels wenigstens einem Sprachauswertungsalgorithmus bzw. Spracherkennungsalgorithmus. Zum Beispiel kann in Block 11 bestimmt werden, welches Thema bzw. welchen Betreff die Sprachnachricht besitzt. Ebenso ist es möglich, die Sprachnachricht in Text zu transformieren und diese als Bestandteil der Kommunikationsinformation bereitzustellen.

Unabhängig davon, ob die optionale Verarbeitung in Block 11 stattfindet, kann die Kommunikationsinformation anschließend in Block 12 bereitgestellt werden. Wie bereits in Bezug auf Fig. 1, 2 beschrieben wurde, kann das Bereitstellen der Kommunikationsinformation durch die Servervorrichtung 6 oder durch eine Treibereinrichtung 8 erfolgen. In beiden Fällen kann die Kommunikationsinformation formatiert werden, sodass diese für wenigstens eine bestimmte Nutzerdatenschnittstelle 7 geeignet ist. Hierbei kann eine Transformation bzw. Formatierung in unterschiedliche Formate erfolgen, sodass unterschiedliche Nutzerdatenschnittstellen 7 bedient werden können.

In Block 13 kann die durch die Servervorrichtung 6 oder die Treibereinrichtung 8 bereitgestellte Kommunikationsinformation von der Nutzerdatenschnittstelle 7 abgerufen werden. Optional kann nach Abruf der Kommunikationsinformation die Kommunikationsinformation von der Servervorrichtung 6 und/oder von der Treibereinrichtung 8 gelöscht werden. Seitens der Nutzerdatenschnittstelle 7 kann in Block 13 ferner eine Zuordnung der Kommunikationsinformation zu einem bestimmten Teilnehmer, insbesondere dem Teilnehmer mit dem die Kommunikation stattgefunden hat, erfolgen. Die Zuordnung kann insbesondere anhand der Teilnehmeridentifikation der Kommunikationsinformation erfolgen. Zum Beispiel sind in der Nutzerdatenschnittstelle 7 Kundendaten gespeichert, die Rufnummern umfassen. Somit kann die Kommunikationsinformation demjenigen Kundeneintrag bzw. Teilnehmereintrag hinzugefügt werden, mit dem die Kommunikation mit dem Endgerät 3 stattgefunden hat, die von der Kommunikationsinformation betroffen ist bzw. durch diese beschrieben wird.

Mit anderen Worten wird, wie beschrieben, automatisiert bei einer Kommunikation über das Endgerät 3 eine Kommunikationsinformation erzeugt, die von der Nutzerdatenschnittstelle 7 anschließend, insbesondere in Echtzeit, abgerufen werden kann. Dabei erfolgt die Zuordnung zu dem konkreten Teilnehmer 4, mit dem über das Endgerät 3 kommuniziert wurde bzw. mit dem die Kommunikation stattgefunden hat. Als Einträge in den wenigstens einen Teilnehmereintrag sind beispielsweise möglich, dass eine Kommunikation stattgefunden hat, insbesondere zu welcher Uhrzeit und über welche Dauer telefoniert wurde, ob das Telefonat eingegangen oder ausgegangen ist, bzw. dass ein Anruf verpasst wurde, dass ein Anruf weitergeleitet wurde, dass eine Nachricht empfangen wurde oder eine Nachricht ausgegangen ist und dergleichen.

Die in Bezug auf die Ausführungsbeispiele beschriebenen Vorteile, Einzelheiten und Merkmale sind beliebig miteinander kombinierbar, untereinander austauschbar und aufeinander übertragbar.

### BEZUGSZEICHEN

- 1: Kommunikationssystem
- 2: Kommunikationsnetz
- 3: Endgerät
- 4: Teilnehmer
- 5: SIM-Karteneinrichtung
- 6: Servervorrichtung
- 7: Nutzerdatenschnittstelle
- 8: Treibereinrichtung
- 9-13: Block

## Patentansprüche

1. Kommunikationssystem (1), umfassend wenigstens eine, insbesondere Cloud-basierte, Servervorrichtung (6), die dazu ausgebildet ist, wenigstens eine Kommunikationsinformation eines Endgeräts (3), insbesondere eines Mobiltelefons, das basierend auf wenigstens einem Kommunikationsparameter einer SIM-Karteneinrichtung (5) zur Kommunikation in einem bestimmten Kommunikationsnetz (2), insbesondere einem Mobilfunknetz, konfiguriert ist, aus dem Kommunikationsnetz (2) zu erfassen, wobei die Kommunikationsinformation wenigstens eine eingehende und/oder ausgehende Kommunikation, insbesondere ein Telefonat und/oder eine Nachricht, des Endgeräts (3) betrifft, wobei die Servervorrichtung (6) dazu ausgebildet ist, die wenigstens eine Kommunikationsinformation einen Abruf durch eine Nutzerdatenschnittstelle (7) bereitzustellen.

2. Kommunikationssystem (1) nach Anspruch 1, **dadurch gekennzeichnet, dass** das Kommunikationssystem (1) dazu ausgebildet ist, die Kommunikationsinformation parallel zu der Kommunikation des Endgeräts (3) an die Servervorrichtung (6) zu übertragen.

3. Kommunikationssystem (1) nach Anspruch 1 oder 2, **dadurch gekennzeichnet, dass** das Kommunikationssystem (1) dazu ausgebildet ist, die Kommunikationsinformation in Echtzeit an die Servervorrichtung (6) zu übertragen.

4. Kommunikationssystem (1) nach einem der vorangehenden Ansprüche, **dadurch gekennzeichnet, dass** das Kommunikationssystem (1) dazu ausgebildet ist, mittels der Servervorrichtung (6) die wenigstens eine Kommunikationsinformation direkt der Nutzerdatenschnittstelle (7) zum Abruf bereitzustellen oder von der Servervorrichtung (6) an eine Treibereinrichtung (8) zu übertragen, welche Treibereinrichtung (8) dazu ausgebildet ist, die wenigstens eine Kommunikationsinformation direkt der Nutzerdatenschnittstelle (7) zum Abruf bereitzustellen.

5. Kommunikationssystem (1) nach einem der vorangehenden Ansprüche, **dadurch gekennzeichnet, dass** die wenigstens eine Kommunikationsinformation wenigstens eine der folgenden Informationen umfasst:
- ein eingehendes, insbesondere angenommenes, Telefonat und/oder
- ein ausgehendes Telefonat und/oder
- eine eingehende Textnachricht und/oder
- eine ausgehende Textnachricht und/oder
- einen verpassten Anruf und/oder
- einen weitergeleiteten Anruf und/oder
- eine Anrufdauer und/oder
- eine Teilnehmeridentifikation, insbesondere eine Rufnummer, und/oder
- eine Sprachnachricht
- und/oder eine Telefonkonferenz.

6. Kommunikationssystem (1) nach einem der vorangehenden Ansprüche, **dadurch gekennzeichnet, dass** die Nutzerdatenschnittstelle (7) basierend auf einer aus der wenigstens einen Kommunikationsinformation bestimmten Teilnehmeridentifikation zur Zuordnung einer Kommunikationsinformation zu einem Teilnehmer ausgebildet ist.

7. Kommunikationssystem (1) nach einem der vorangehenden Ansprüche, **dadurch gekennzeichnet, dass** das Kommunikationssystem (1) dazu ausgebildet ist, eine Gesprächsinformation aus einer Sprachnachricht, insbesondere von einer Mailbox, zu bestimmen.

8. Kommunikationssystem (1) nach einem der vorangehenden Ansprüche, **dadurch gekennzeichnet, dass** das Kommunikationssystem (1) eine Anwendungsprogrammierschnittstelle und/oder eine Telefonie-Anwendungsprogrammierschnittstelle umfasst.

9. SIM-Karteneinrichtung (5) für ein Kommunikationssystem (1) nach einem der vorangehenden Ansprüche, wobei die SIM-Karteneinrichtung (5) zur Konfiguration eines Endgeräts (3) zur Teilnahme an dem Kommunikationsnetz (2) des Kommunikationssystems (1) ausgebildet ist.

10. Verfahren zum Betreiben eines Kommunikationssystems (1), insbesondere eines Kommunikationssystem (1) nach einem der Ansprüche 1 bis 8, umfassend wenigstens eine, insbesondere Cloud-basierte, Servervorrichtung (6), mittels welcher Servervorrichtung (6) wenigstens eine Kommunikationsinformation eines Endgeräts (3), insbesondere eines Mobiltelefons, das basierend auf wenigstens einem Kommunikationsparameter einer SIM-Karteneinrichtung (5) zur Kommunikation in einem bestimmten Kommunikationsnetz (2), insbesondere einem Mobilfunknetz, konfiguriert ist, aus dem Kommunikationsnetz (2) erfasst wird, wobei die Kommunikationsinformation wenigstens eine eingehende und/oder ausgehende Kommunikation, insbesondere ein Telefonat und/oder eine Nachricht, des Endgeräts (3) betrifft, wobei mittels der Servervorrichtung (6) die wenigstens eine Kommunikationsinformation für einen Abruf durch eine Nutzerdatenschnittstelle (7) bereitgestellt wird.
